# EUROPEAN PATENT APPLICATION

(11) **EP 3 933 562 A1**
(43) Date of publication of application: **05.01.2022**
(21) Application number: 21182242.4
(22) Date of filing: 29.06.2021
(51) Int. Cl.: G06F 3/0481, G06F 8/34

(54) **SYSTEM FOR PROVIDING SOFTWARE DEVELOPMENT ENVIRONMENT, METHOD FOR PROVIDING SOFTWARE DEVELOPMENT ENVIRONMENT, AND NON-TRANSITORY COMPUTER READABLE MEDIUM**

(30) Priority: 01.07.2020 JP 2020114207
(71) Applicant: YOKOGAWA ELECTRIC CORPORATION, Musashino-shi Tokyo 180-8750 (JP)
(72) Inventor: ABE, Koh, Musashino-shi, Tokyo, 180-8750 (JP)
(74) Representative: Winter, Brandl - Partnerschaft mbB

(57) **Abstract**

A system for providing a software development environment, a method for providing a software development environment, and a non-transitory computer readable medium that can improve the convenience of a user interface of a software development environment are provided. A system for providing a software development environment to develop software by combining a plurality of development components includes an information processing apparatus (30) that includes a display (35) and a controller (31). The display (35) is configured to display a user interface (200) on which the plurality of development components and a plurality of links connecting the development components to each other are placed. When one development component among the plurality of development components is selected, the controller (31) is configured to display links (401 to 403, 405) connected to the selected development component (305) on the display (35) in a display form with emphasis.

## Description

### CROSS-REFERENCE TO RELATED APPLICATION

The present application claims priority to Japanese Patent Application No. 2020-114207 filed on July 1, 2020, the entire contents of which are incorporated herein by reference.

### TECHNICAL FIELD

The present disclosure relates to a system for providing a software development environment, a method for providing a software development environment, and a non-transitory computer readable medium.

### BACKGROUND

Along with advances in technology pertaining to the Internet of Things (IOT), systems have been proposed for automatic control of various devices, sensors, and the like connected to a network in plants, factories, buildings, residences, and the like. For example, various systems (engineering systems) have been constructed in plants, factories, and the like, such as a distributed control system, a manufacturing execution system (MES), a plant information management system (PIMS), and an enterprise resource planning (ERP) system.

The development of software implemented in these engineering systems, such as applications, workflow, and programs, has been achieved using an apparatus installed in a plant, such as a programmable logic controller (PLC). Patent literature (PTL) 1, for example, proposes technology to support software development using a visual programming tool. Specifically, PTL 1 discloses the development of software by representing various processes, such as functions, collectively as an object and representing the relationships between processes by wires connecting the processes.

### CITATION LIST

### Patent Literature

PTL 1: JP 2020-42679 A

### SUMMARY

When numerous objects are combined to develop software using the technology in PTL 1, however, the relationship between objects becomes harder to grasp as the number of combined objects increases. In other words, there is room for improvement in the convenience of the user interface of the software development environment.

It would be helpful to provide a system for providing a software development environment, a method for providing a software development environment, and a non-transitory computer readable medium that can improve the convenience of the user interface of a software development environment.

A system for providing a software development environment according to an embodiment is a system for providing a software development environment to develop software by combining a plurality of development components, the system including an information processing apparatus that includes a display and a controller, wherein
the display is configured to display a user interface on which the plurality of development components and a plurality of links connecting the development components to each other are placed; and
when one development component among the plurality of development components is selected, the controller is configured to display a link connected to the selected development component on the display in a display form with emphasis.

According to the system for providing a software development environment of an embodiment, when one development component among the plurality of development components is selected, a link connected to the selected development component is thus displayed on the display in a display form with emphasis. This enables the user to grasp the relationship between development components easily. In other words, the convenience of the user interface of a software development environment can be improved by the system for providing a software development environment in an embodiment.

In an embodiment, the controller may be configured to display the selected development component on the display with emphasis.

According to the system for providing a software development environment of an embodiment, when one development component among the plurality of development components is selected, the selected development component is thus also displayed in a display form with emphasis, in addition to the link connected to the development component. This enables the user to grasp the relationship between development components more easily.

In an embodiment, the controller may be configured to display a link connected to an input port and a link connected to an output port of the selected development component on the display with emphasis in different colors.

According to the system for providing a software development environment of an embodiment, the link connected to the input port and the link connected to the output port of the selected development component are thus displayed with emphasis in different colors. This configuration enables the user to easily grasp the relationship between development components in a form that distinguishes between the input side and the output side.

In an embodiment, the controller may be configured to display a link connected to the selected development component on the display in a higher-level layer than a link not connected to the selected development component.

According to the system for providing a software development environment of an embodiment, the link connected to the selected development component is thus displayed on the display in a higher-level layer, thereby improving the operability when an operation to select the link is performed.

In an embodiment, the controller may be configured to display a link connected indirectly to the selected development component on the display with emphasis.

According to the system for providing a software development environment of an embodiment, the indirectly connected links are thus displayed with emphasis. This enables the user to easily grasp which development components are affected by the input and output of a certain development component.

In an embodiment, the controller may be configured to display a link connected directly to the selected development component and a link connected indirectly to the selected development component on the display with emphasis in different colors.

According to the system for providing a software development environment of an embodiment, the link connected directly to the selected development component and the link connected indirectly to the selected development component are thus displayed with emphasis in different colors. This configuration enables the user to easily grasp the relationship between development components in a form that distinguishes between directly connected links and indirectly connected links.

In an embodiment, the plurality of development components may include at least two development components that are of the same type and are connected to the same destination development component, and
the at least two development components may be displayed by an integrated object corresponding to the at least two development components.

According to the system for providing a software development environment of an embodiment, the number of objects and the number of links are thus reduced, enabling the user to easily grasp the relationship between development components.

In an embodiment, the controller may be configured to display the integrated object in a display form that includes the number of integrated development components.

According to the system for providing a software development environment in an embodiment, the user can thus easily learn the number of integrated development components.

A method for providing a software development environment according to an embodiment is a method for providing a software development environment to develop software by combining a plurality of development components, the method including:
displaying a user interface on which the plurality of development components and a plurality of links connecting the development components to each other are placed; and
displaying, when one development component among the plurality of development components is selected, a link connected to the selected development component in a display form with emphasis.

According to the method for providing a software development environment of an embodiment, when one development component among the plurality of development components is selected, a link connected to the selected development component is thus displayed in a display form with emphasis. This enables the user to grasp the relationship between development components easily. In other words, the convenience of the user interface of a software development environment can be improved by the method for providing a software development environment in an embodiment.

A non-transitory computer readable medium according to an embodiment is a non-transitory computer readable medium storing a program, for providing a software development environment, configured to cause a processor to execute operations including:
displaying a user interface on which the plurality of development components and a plurality of links connecting the development components to each other are placed; and
displaying, when one development component among the plurality of development components is selected, a link connected to the selected development component in a display form with emphasis.

According to the non-transitory computer readable medium storing a program for providing a software development environment of an embodiment, when one development component among the plurality of development components is selected, a link connected to the selected development component is thus displayed in a display form with emphasis. This enables the user to grasp the relationship between development components easily. In other words, the convenience of the user interface of a software development environment can be improved by the non-transitory computer readable medium that stores a program for providing a software development environment in an embodiment.

According to the present disclosure, a system for providing a software development environment, a method for providing a software development environment, and a non-transitory computer readable medium that can improve technology related to the user interface of a software development environment can be provided.

### BRIEF DESCRIPTION OF THE DRAWINGS

In the accompanying drawings:
FIG. 1 is a functional block diagram of a system for providing a software development environment according to an embodiment of the present disclosure;
FIG. 2 is a diagram illustrating a user interface in the system for providing a software development environment according to an embodiment of the present disclosure;
FIG. 3 is a diagram illustrating a trigger selection dialog box in the system for providing a software development environment according to an embodiment of the present disclosure;
FIG. 4 is a diagram illustrating a user interface in which the development component selected in the trigger selection dialog box is placed;
FIG. 5 is a diagram illustrating a user interface on which a plurality of development components is placed;
FIG. 6 is a flowchart illustrating a method for providing a software development environment according to an embodiment of the present disclosure;
FIG. 7 is a diagram illustrating an overview of operations in the method for providing a software development environment according to an embodiment of the present disclosure;
FIG. 8 is a diagram illustrating an overview of operations in the method for providing a software development environment according to an embodiment of the present disclosure;
FIG. 9 is a diagram illustrating an overview of operations in the method for providing a software development environment according to an embodiment of the present disclosure;
FIG. 10 is a diagram illustrating an overview of operations for changing the destination of a link displayed with emphasis;
FIG. 11 is a diagram illustrating an overview of operations for changing the destination of a link displayed with emphasis;
FIG. 12 is a diagram illustrating an overview of operations for changing the destination of a link displayed with emphasis;
FIG. 13 is a diagram illustrating an overview of operations for changing the destination of a link displayed with emphasis;
FIG. 14 is a diagram illustrating an example of the case of changing the line type of links;
FIG. 15 is a diagram illustrating a display example of the case of emphasizing links connected indirectly to a selected development component; and
FIG. 16 is a diagram illustrating an example in which an integrated object is displayed in the system for providing a software development environment according to an embodiment of the present disclosure.

### DETAILED DESCRIPTION

A system 10 for providing a software development environment according to an embodiment of the present disclosure is described below with reference to the drawings.

Identical or equivalent portions in the drawings are labeled with the same reference signs. In the explanation of the present embodiment, a description of identical or equivalent portions is omitted or simplified as appropriate.

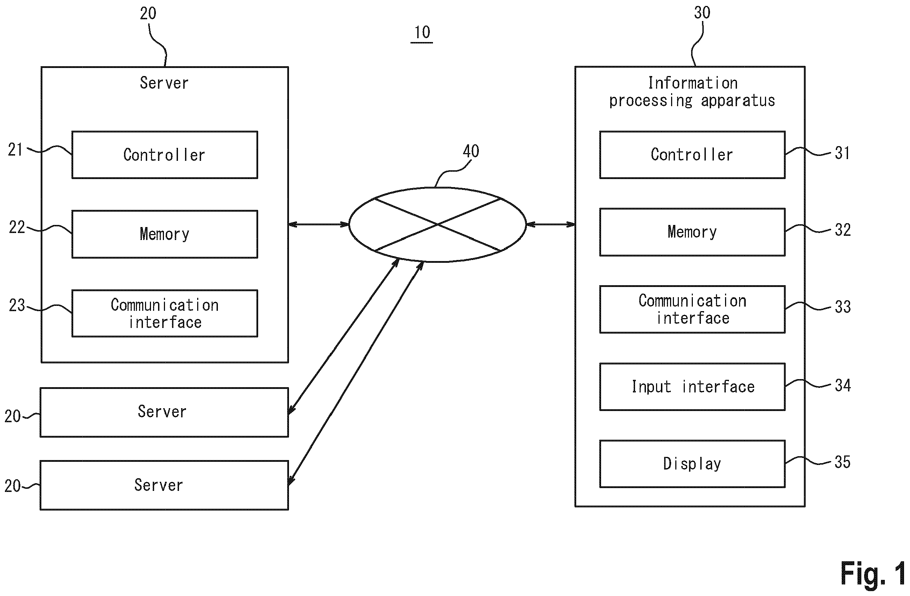

An overview and configuration of the system 10 for providing a software development environment according to the present embodiment are described with reference to FIGS. 1 to 3.

The system 10 for providing a software development environment according to the present embodiment includes a plurality of servers 20 and an information processing apparatus 30. The servers 20 and the information processing apparatus 30 are communicably connected to a network 40, such as a mobile communication network and/or the Internet. Each server 20 is, for example, installed in a data center or the like. Each server 20 is, for example, a server belonging to a cloud computing system or another computing system. In overview, the system 10 for providing a software development environment provides a user with an environment, for example on the cloud, for developing software by combining a plurality of development components. The user operates the information processing apparatus 30 to access the cloud, which is formed by the plurality of servers 20, using a web browser on the information processing apparatus 30, for example. The user can then develop software by combining a plurality of development components on an interface displayed by the web browser. The system 10 for providing a software development environment in FIG. 1 includes three servers 20, but this example is not limiting. The system 10 for providing a software development environment may include fewer than three servers 20 or may include four or more servers 20. The number of servers 20 may also be one.

The configurations of the server 20 and the information processing apparatus 30 according to the present embodiment are described below.

As illustrated in FIG. 1, the server 20 includes a controller 21, a memory 22, and a communication interface 23.

The controller 21 includes at least one processor, at least one dedicated circuit, or a combination thereof. The processor may, for example, be a general-purpose processor, such as a central processing unit (CPU) or graphics processing unit (GPU), or a dedicated processor specialized for particular processing. The dedicated circuit may, for example, be a field-programmable gate array (FPGA) or an application specific integrated circuit (ASIC). The controller 21 executes processing related to operation of the server 20 while controlling each component of the server 20.

The memory 22 includes at least one semiconductor memory, at least one magnetic memory, at least one optical memory, or a combination of at least two of these. The semiconductor memory is, for example, random access memory (RAM) or read only memory (ROM). The RAM is, for example, static random access memory (SRAM) or dynamic random access memory (DRAM). The ROM is, for example, electrically erasable programmable read only memory (EEPROM). The memory 22 functions as, for example, a main memory, an auxiliary memory, or a cache memory. The memory 22 stores data to be used for operation of the server 20 and data resulting from operation of the server 20.

The communication interface 23 includes at least one interface for communication with an external destination. The interface for communication may be an interface for wired communication or wireless communication. In the case of wired communication, the interface for communication may be a local area network (LAN) interface or a universal serial bus (USB), for example. In the case of wireless communication, the interface for communication may be an interface conforming to a mobile communication standard, such as Long Term Evolution (LTE), 4th Generation (4G), or 5th Generation (5G), or an interface conforming to short-range wireless communication such as Bluetooth^{®} (Bluetooth is a registered trademark in Japan, other countries, or both). The communication interface 23 receives data for use in operation of the server 20 and transmits data resulting from operation of the server 20.

The functions of the server 20 are implemented by a processor corresponding to the controller 21 executing a program according to the present embodiment. In other words, the functions of the server 20 are implemented by software. The program causes a computer to function as the server 20 by causing the computer to execute the operations of the server 20. In other words, the computer functions as the server 20 by executing the operations of the server 20 in accordance with the program.

The program according to the present embodiment can be recorded on a computer readable recording medium. Computer readable recording media include non-transitory computer readable recording media, examples of which are a magnetic recording apparatus, an optical disc, a magneto-optical recording medium, and a semiconductor memory. The program is, for example, distributed by the sale, transfer, or lending of a portable recording medium such as a digital versatile disk (DVD) or a compact disk read only memory (CD-ROM) on which the program is recorded. The program may also be distributed by storing the program in the storage of an external server and transmitting the program from the external server to another computer. The program may also be provided as a program product.

A portion or all of the functions of the server 20 may be implemented by a dedicated circuit corresponding to the controller 21. In other words, a portion or all of the functions of the server 20 may be implemented by hardware.

The information processing apparatus 30 includes a controller 31, a memory 32, a communication interface 33, an input interface 34, and a display 35.

The controller 31 includes at least one processor, at least one dedicated circuit, or a combination thereof. The processor may be a general-purpose processor, such as a CPU or GPU, or a dedicated processor specialized for particular processing. The dedicated circuit is, for example, an FPGA or an ASIC. The controller 31 executes processing related to operation of the information processing apparatus 30 while controlling each component of the information processing apparatus 30.

The memory 32 includes at least one semiconductor memory, at least one magnetic memory, at least one optical memory, or a combination of at least two of these. The semiconductor memory is, for example, RAM or ROM. The RAM is, for example, SRAM or DRAM. The ROM is, for example, EEPROM. The memory 32 functions as, for example, a main memory, an auxiliary memory, or a cache memory. The memory 32 stores data to be used for operation of the information processing apparatus 30 and data resulting from operation of the information processing apparatus 30.

The communication interface 33 includes at least one interface for communication with an external destination. The interface for communication may be an interface for wired communication or wireless communication. In the case of wired communication, the interface for communication may be a LAN interface or a USB, for example. In the case of wireless communication, the interface for communication may be an interface conforming to a mobile communication standard, such as LTE, 4G, or 5G, or an interface conforming to short-range wireless communication such as Bluetooth^{®}. The communication interface 33 receives data for use in operation of the information processing apparatus 30 and transmits data resulting from operation of the information processing apparatus 30.

The input interface 34 includes at least one interface for input. The interface for input is, for example, a physical key, a capacitive key, a pointing device, or a touchscreen integrally provided with a display. The input interface 34 receives an operation for inputting data used in operation of the information processing apparatus 30. Instead of being provided in the information processing apparatus 30, the input interface 34 may be connected to the information processing apparatus 30 as an external input device. Any appropriate connection method can be used, such as USB, High-Definition Multimedia Interface (HDMI^{®}) (HDMI is a registered trademark in Japan, other countries, or both), or Bluetooth^{®}.

The display 35 includes at least one interface for display output. The interface for output is, for example, a display. The display may, for example, be a liquid crystal display (LCD) or an organic electro luminescence (EL) display. The display 35 outputs data resulting from operation of the information processing apparatus 30 by displaying the data. Instead of being provided in the information processing apparatus 30, the display 35 may be connected to the information processing apparatus 30 as an external output device. Any appropriate connection method can be used, such as USB, HDMI^{®}, or Bluetooth^{®}.

The functions of the information processing apparatus 30 are implemented by a processor corresponding to the controller 31 executing a program according to the present embodiment. In other words, the functions of the information processing apparatus 30 are implemented by software. The program causes a computer to function as the information processing apparatus 30 by causing the computer to execute the operations of the information processing apparatus 30. In other words, the computer functions as the information processing apparatus 30 by executing the operations of the information processing apparatus 30 in accordance with the program.

The computer in the present embodiment temporarily stores, in the main memory, the program recorded on a portable recording medium or transferred from a server, for example. The computer uses a processor to read the program stored in the main memory and executes processing with the processor in accordance with the read program. The computer may read the program directly from the portable recording medium and execute processing in accordance with the program. Each time the program is received from an external server, the computer may sequentially execute processing in accordance with the received program. Processing may be executed by an application service provider (ASP) type of service that implements functions only via execution instructions and result acquisition, without transmission of the program from an external server to the computer. Examples of the program include an equivalent to the program represented as information provided for processing by an electronic computer. For example, data that is not a direct command for a computer but that has the property of specifying processing by the computer corresponds to the "equivalent to the program".

A portion or all of the functions of the information processing apparatus 30 may be implemented by a dedicated circuit corresponding to the controller 31. In other words, a portion or all of the functions of the information processing apparatus 30 may be implemented by hardware.

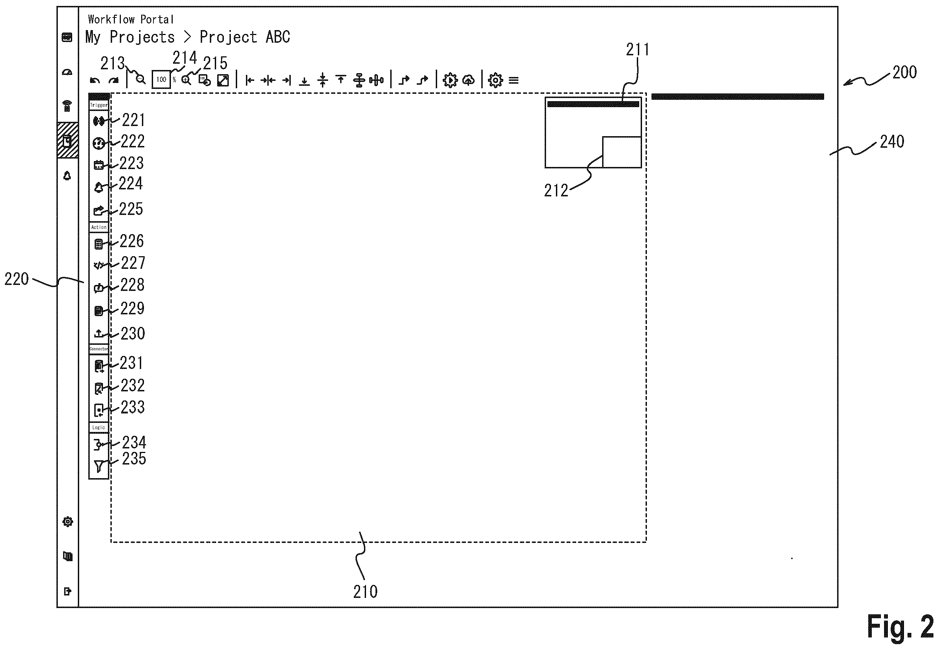

FIG. 2 illustrates an example of a user interface displayed on the display 35 of the information processing apparatus 30. The user operates the input interface 34 of the information processing apparatus 30 to access the server 20 via a web browser, for example. The user then develops software by combining a plurality of development components on the user interface displayed in the web browser. It is thus not necessary in the present embodiment to install, on the information processing apparatus 30, an application or the like that is specialized for the system 10 for providing a software development environment. In other words, as long as the information processing apparatus 30 includes a web browser application, the user can develop software by connecting to the server 20 from the information processing apparatus 30.

The user interface 200 illustrated in FIG. 2 includes a builder area 210, a development component selection area 220, and a property area 240. The builder area 210 is an area for a plurality of development components to be placed, connected, and the like. The user develops software by combining a plurality of development components in the builder area 210. The builder area 210 includes an overview screen 211. The overview screen 211 displays an overview of the placed development components using a reduced-size screen. In other words, the overview screen 211 is a screen displaying all of the placed development components at a reduced size. The range displayed by the builder area 210 (display area) is indicated in the overview screen 211 by a display range frame 212. The display area of the builder area 210 can be expanded or reduced by magnification adjustment tools 213 to 215. The development component selection area 220 is an area for displaying a plurality of development components 221 to 235 that are placeable in the builder area 210. The property area 240 is an area for displaying and editing setting information and the like pertaining to a development component selected in the builder area 210.

The development components in the present embodiment are classified into types such as trigger, action, connector, and logic. The development components 221 to 225 illustrated in FIG. 2 are classified as triggers. The development components classified as triggers are components pertaining to the occurrence of some sort of event, such as the acquisition of a sensor value from a sensor such as a temperature sensor, humidity sensor, or pressure sensor, the elapse of a predetermined length of time, or the occurrence of a predetermined alarm on a device. The development components 226 to 230 are classified as actions. The development components classified as actions are components pertaining to an operation, processing, or the like, such as calculation processing, notification, or uploading of data, that is performed when an event occurs. The development components 231 to 233 are classified as connectors. The development components classified as connectors are components pertaining to information processing with an external resource, such as connection to a database, device, or the like and the addition, updating, deletion, etc. of information thereon. The development components 234 to 235 are classified as logic. The development components classified as logic are components pertaining to the logical sum, filtering, or the like of input information. The user manipulates a mouse pointer or the like to develop software on the user interface 200. For example, the user manipulates a mouse pointer to select a desired development component from the development component selection area 220 and then places, connects, etc. the selected, desired development component in the builder area 210.

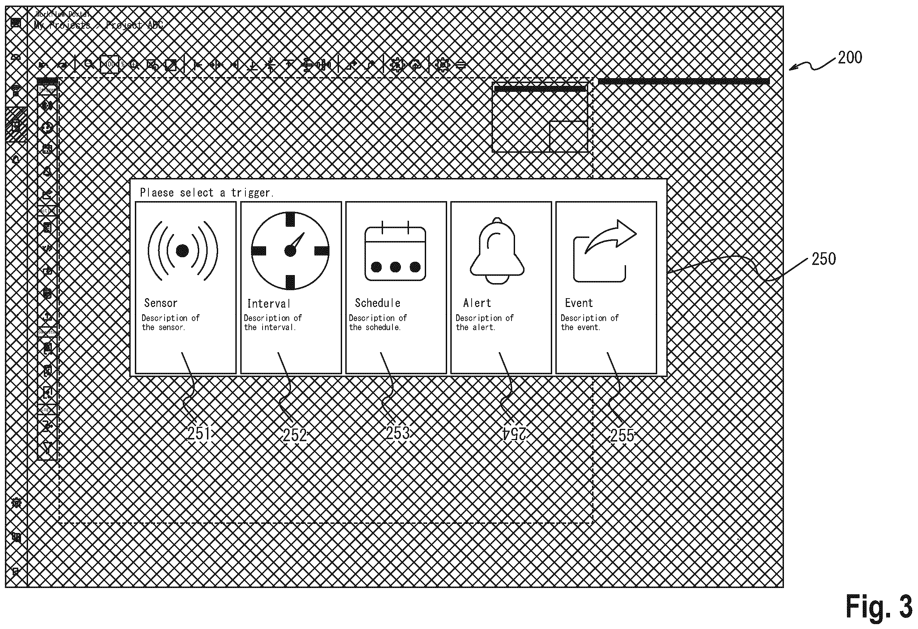

FIG. 3 is a diagram illustrating a trigger selection dialog box in the system for providing a software development environment according to an embodiment of the present disclosure. A trigger selection dialog box 250 illustrated in FIG. 3 is displayed when no development component has been placed in the builder area 210. The trigger selection dialog box 250 is a dialog screen for the user to select a development component to place first in the builder area 210. In other words, the user is prompted by the trigger selection dialog box 250 to perform the first operation necessary for software development. The user can thereby easily start developing software. The trigger selection dialog box 250 includes development components 251 to 255, which respectively correspond to the development components 221 to 225 of the development component selection area 220.

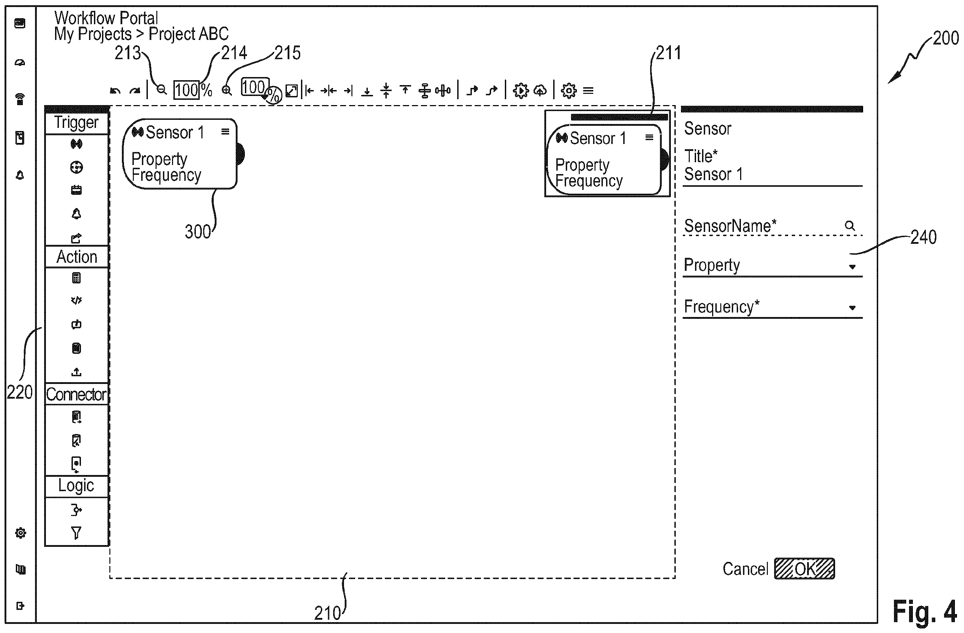

FIG. 4 is a diagram illustrating a user interface in which the development component selected in the trigger selection dialog box 250 is placed in the builder area 210. For example, suppose that the user has operated a mouse pointer and selected the development component 251 pertaining to a sensor in the trigger selection dialog box 250. In this case, as illustrated in FIG. 4, a development component 300 corresponding to a sensor is placed in the builder area 210. Properties are associated with the development component 300. The properties include a variety of variables, conditional expressions, setting information, and the like pertaining to the development component. By selecting and setting properties such as various settings, variables, conditional expressions, and so forth from pulldown menus or the like in the property area 240, the user defines various actions and the like for each development component. In other words, the user can develop software by placing and connecting development components and setting the setting information, with no need whatsoever for writing program code.

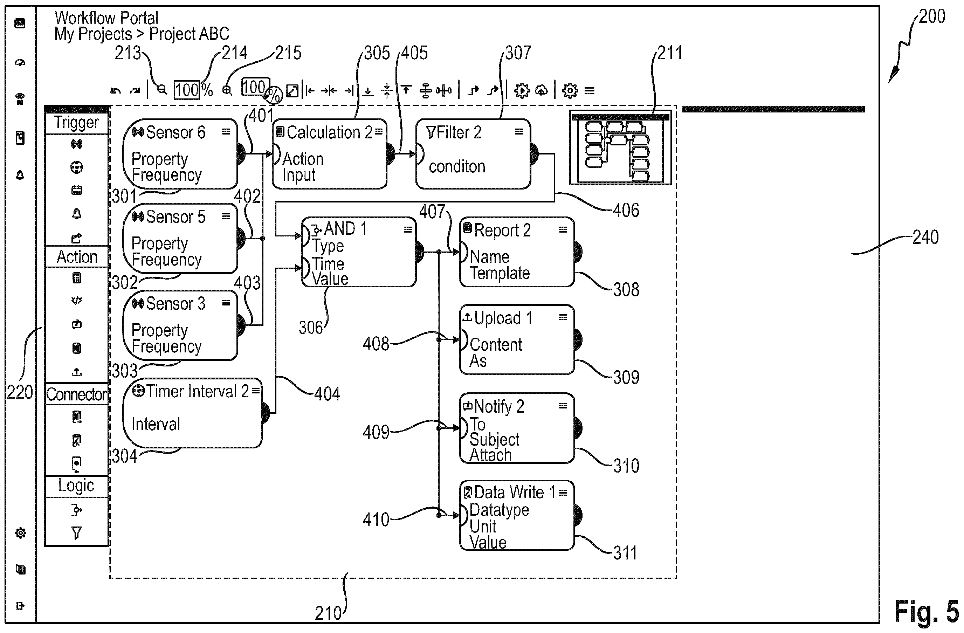

FIG. 5 is an example in which a plurality of development components has been placed and connected in the builder area 210. In FIG. 5, development components 301 to 311 have been placed and are connected by links 401 to 410. The link 401 indicates that the output of the development component 301 is the input of the development component 305. The link 402 indicates that the output of the development component 302 is the input of the development component 305. The link 403 indicates that the output of the development component 303 is the input of the development component 305. The link 404 indicates that the output of the development component 304 is the input of the development component 306. The link 405 indicates that the output of the development component 305 is the input of the development component 307. The link 406 indicates that the output of the development component 307 is the input of the development component 306. The link 407 indicates that the output of the development component 306 is the input of the development component 308. The link 408 indicates that the output of the development component 306 is the input of the development component 309. The link 409 indicates that the output of the development component 306 is the input of the development component 310. The link 410 indicates that the output of the development component 306 is the input of the development component 311. Properties are associated with each of the development components 301 to 311.

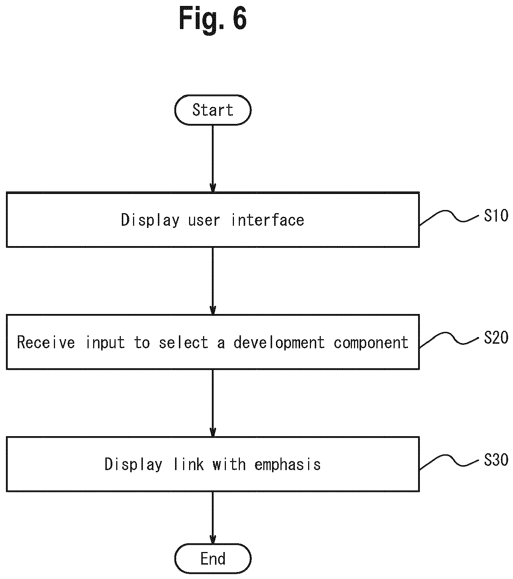

FIG. 6 is a flowchart illustrating operations by the system 10 for providing a software development environment, i.e. an example of a method for providing a software development environment.

First, the controller 31 of the information processing apparatus 30 displays the user interface 200 on the display 35 (step S10). FIG. 5 is an example of the user interface 200 displayed in this case. As described above, the user interface 200 includes the builder area 210 and the development component selection area 220, which displays a plurality of development components placeable in the builder area 210. Here, a request to display the user interface 200 is based on an input operation from the user. For example, the controller 31 uses the input interface 34 to receive an input operation by the user on the web browser. Upon receiving the input operation, the controller 31 communicates with the server 20 via the communication interface 33 and receives data pertaining to the user interface 200. The controller 31 then displays the user interface 200 on the display 35 based on the data. An authentication process or the like pertaining to the user may be performed by the server 20 and the information processing apparatus 30 as appropriate.

Next, the input interface 34 receives an input to select one of the development components 301 to 311 displayed in the builder area 210 (step S20). For example, the input interface 34 receives an input to select the development component 305.

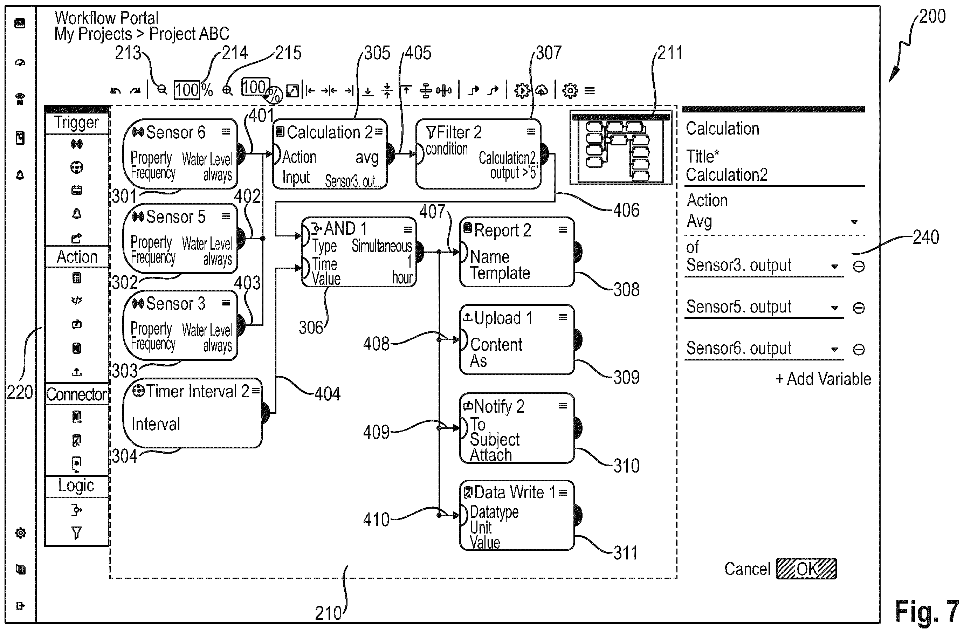

Subsequently, the controller 31 displays links connected to the selected development component in an emphasized display form on the display 35 (step S30). FIG. 7 illustrates an example of the emphasized display form. The links connected to the selected development component 305 are the links 401 to 403 and the link 405. All of these links 401 to 403 and link 405 are displayed with more emphasis than the links not connected to the selected development component 305. Here, the controller 31 may display links connected to the input port of the selected development component and links connected to the output port of the selected development component with emphasis in different colors. The input port of the development component in the present embodiment is the port to which the arrow-shaped end of each link is connected. The output port of the development component is the port to which the opposite end from the arrow-shaped end of each link is connected. In other words, the links connected to the input port of the selected development component are the links 401 to 403. The link connected to the output port of the selected development component is the link 405. For example, the links 401 to 403 are displayed with emphasis in blue. The link 405 is displayed with emphasis in a color other than blue (such as red).

In this way, according to the system 10 for providing a software development environment of the present embodiment, the links connected to a selected development component are displayed in an emphasized display form, as illustrated in FIG. 7, for example. This enables the user to grasp the relationship between development components easily. In other words, the convenience of the user interface of a software development environment can be improved by the system 10 for providing a software development environment in the present embodiment.

As illustrated in FIG. 7, the controller 31 may also display the selected development component (here, the development component 305) with emphasis in addition to the links connected to the selected development component. When the selected development component is also displayed with emphasis, the user can more easily grasp the relationship between development components.

The form of the emphasized display is not limited to this example. For example, the display may be emphasized by appropriately changing any parameter such as brightness, the shade of the display color, or the contrast of the link or development component, or a combination thereof. Apart from changing these parameters, the display may also be emphasized by any form that stands out visually as compared to other links or development components.

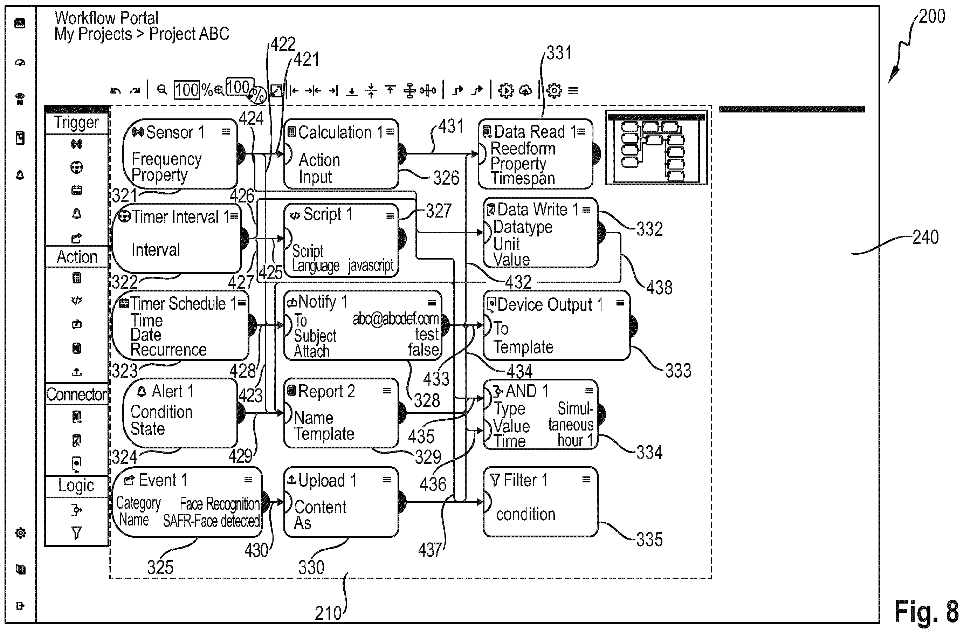

The system 10 for providing a software development environment according to the present embodiment achieves a greater effect when a plurality of development components are present in the builder area 210 and have a complex connection relationship. FIG. 8 illustrates an example of the case when the number of placed development components is large. In FIG. 8, the development components 321 to 335 have been placed in the builder area 210. The link 421 indicates that the output of the development component 321 is the input of the development component 326. The link 422 indicates that the output of the development component 321 is the input of the development component 328. The link 423 indicates that the output of the development component 321 is the input of the development component 329. The link 424 indicates that the output of the development component 321 is the input of the development component 335. The link 425 indicates that the output of the development component 322 is the input of the development component 327. The link 426 indicates that the output of the development component 322 is the input of the development component 332. The link 427 indicates that the output of the development component 322 is the input of the development component 334. The link 428 indicates that the output of the development component 323 is the input of the development component 328. The link 429 indicates that the output of the development component 324 is the input of the development component 329. The link 430 indicates that the output of the development component 325 is the input of the development component 330. The link 431 indicates that the output of the development component 326 is the input of the development component 331. The link 432 indicates that the output of the development component 328 is the input of the development component 331. The link 433 indicates that the output of the development component 328 is the input of the development component 333. The link 434 indicates that the output of the development component 328 is the input of the development component 334. The link 435 indicates that the output of the development component 329 is the input of the development component 334. The link 436 indicates that the output of the development component 329 is the input of the development component 334. The link 437 indicates that the output of the development component 330 is the input of the development component 333.

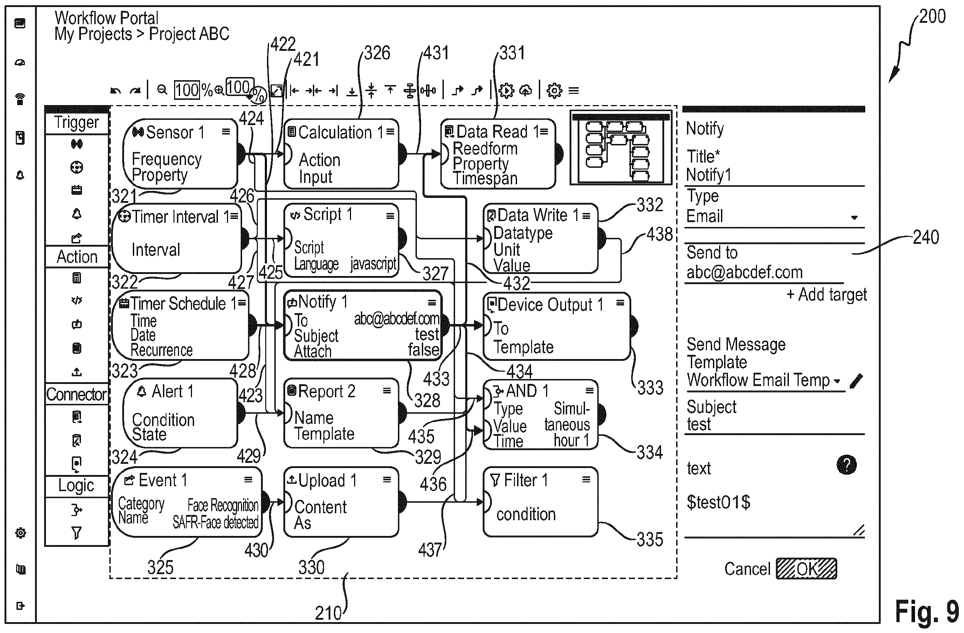

If the number of development components and links increases as in FIG. 8, the connection relationship between development components can become hard to grasp. The controller 31 therefore displays the links connected to a development component with emphasis based on an input to select the development component. FIG. 9 illustrates an example of the development component 328 being selected. In this case, the links connected to the development component 328, i.e. the links 422, 428, 432, 433, 434, are displayed with emphasis. When the links connected to a selected development component are thus displayed with emphasis, the user can easily grasp the relationship between development components.

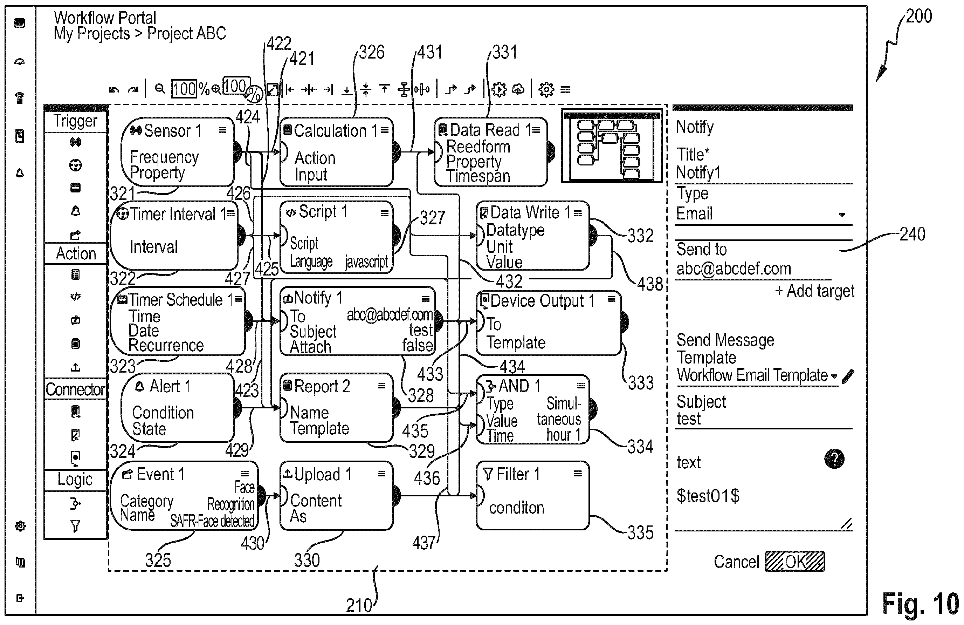

Furthermore, the controller 31 displays the links connected to a selected development component on the display 35 in a higher-level layer than links not connected to the selected development component. Operability can thereby be improved when an operation to select the links is performed. For example, the case of changing the destination of the link 422, among the links displayed with emphasis in FIG. 9, from the development component 328 to the development component 330 is described with reference to FIGS. 10 to 13. The change in the destination of the link is an operation that may occur during debugging, improvement, or the like of software. An increase in operability increases productivity during debugging, improvement, and the like.

For example, when wishing to change the destination of the link 422, the user selects the link 422, which is displayed with emphasis. The input interface 34 receives this selection operation. FIG. 10 illustrates the link 422 in a selected state. As described above, the link 422 displayed with emphasis is displayed in a higher-level layer than links not displayed with emphasis. Therefore, even if links such as the link 423 overlap the link 422, the overlapping links are not selected by mistake.

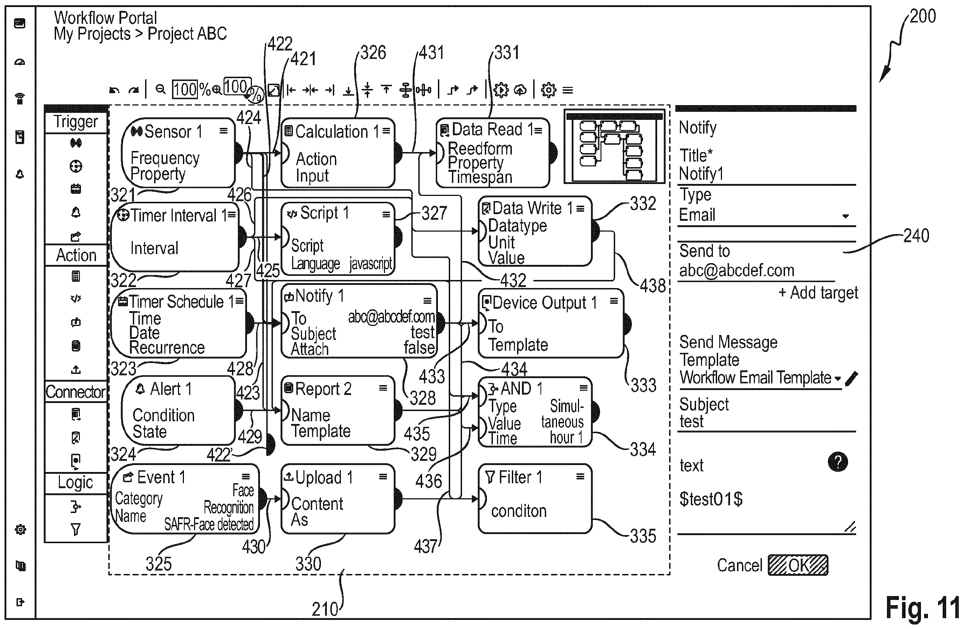

FIG. 11 is a drawing representing an operation screen while an end 422' of the link 422 is being operated to change the destination to the development component 330. The user can change the destination by performing a drag-and-drop operation or the like on the end 422' of the link whose destination is to be changed.

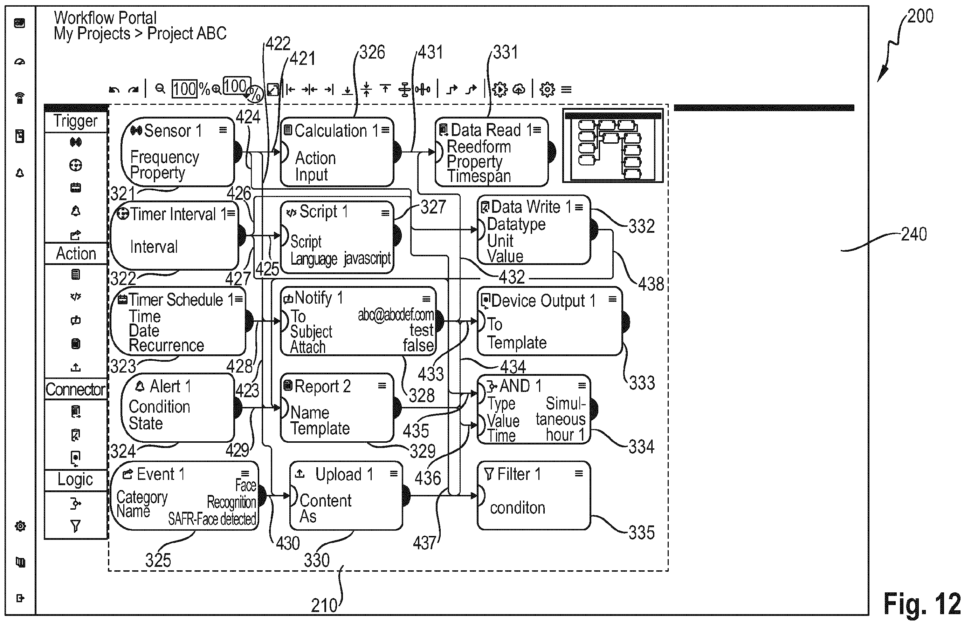

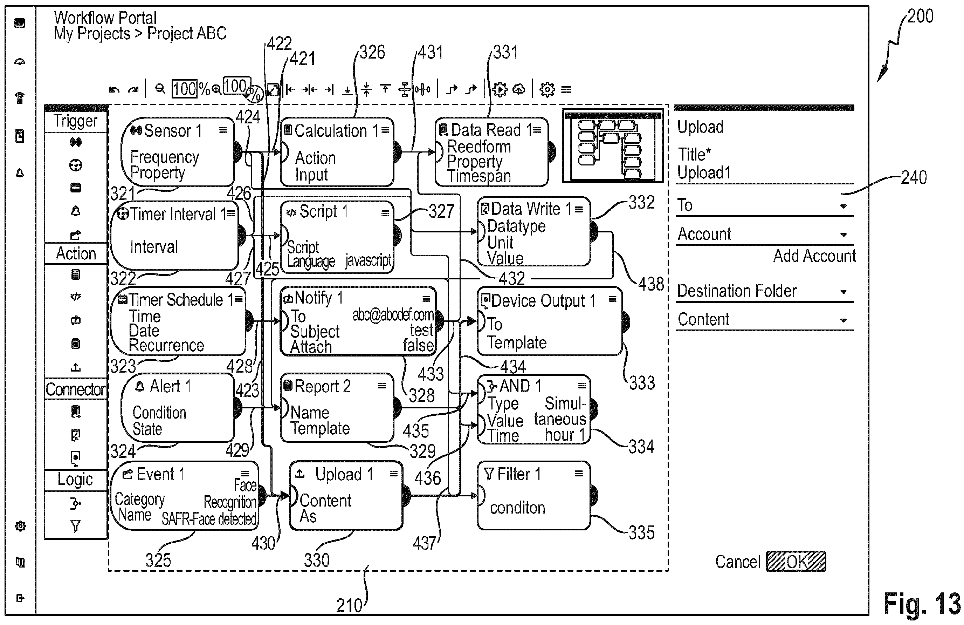

FIG. 12 illustrates the state after the destination of the link 442 has been changed to the development component 330. FIG. 13 is a diagram illustrating a display example in which the development component 330 is selected. It is clear that the destination of the link 422 has changed to the development component 330.

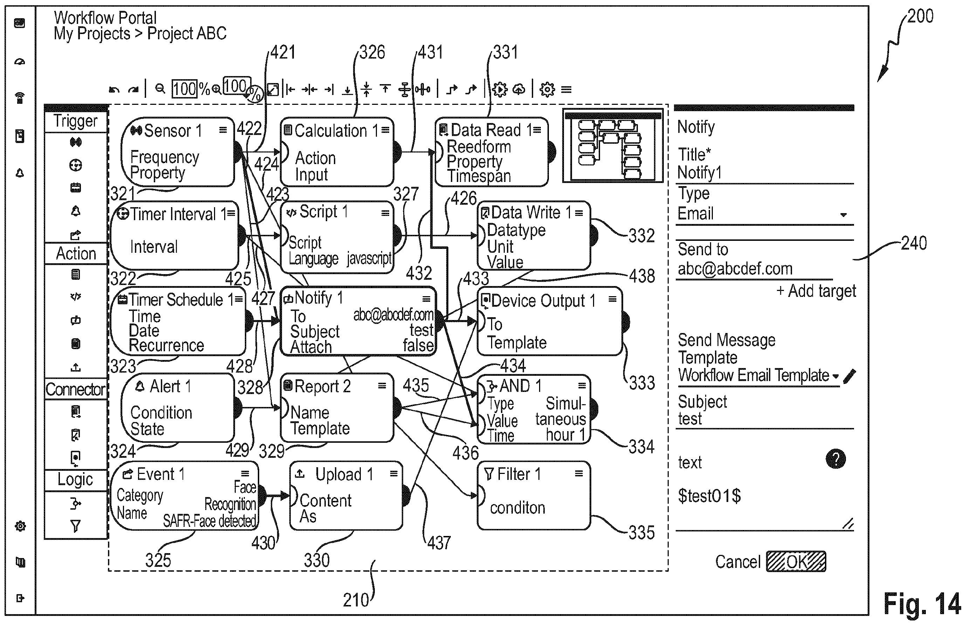

The basic configuration of a link illustrated in the above embodiment is a combination of horizontal or vertical lines, but this example is not limiting. A link may be a line or a curve, extending horizontally, vertically, or diagonally, or a combination thereof, and the line type of a link may be changeable. FIG. 14 is a diagram illustrating an example of the case of changing the line type of the links in the display example of FIG. 8. Switching the line type of links in this way enables the user to easily grasp the relationship between development components.

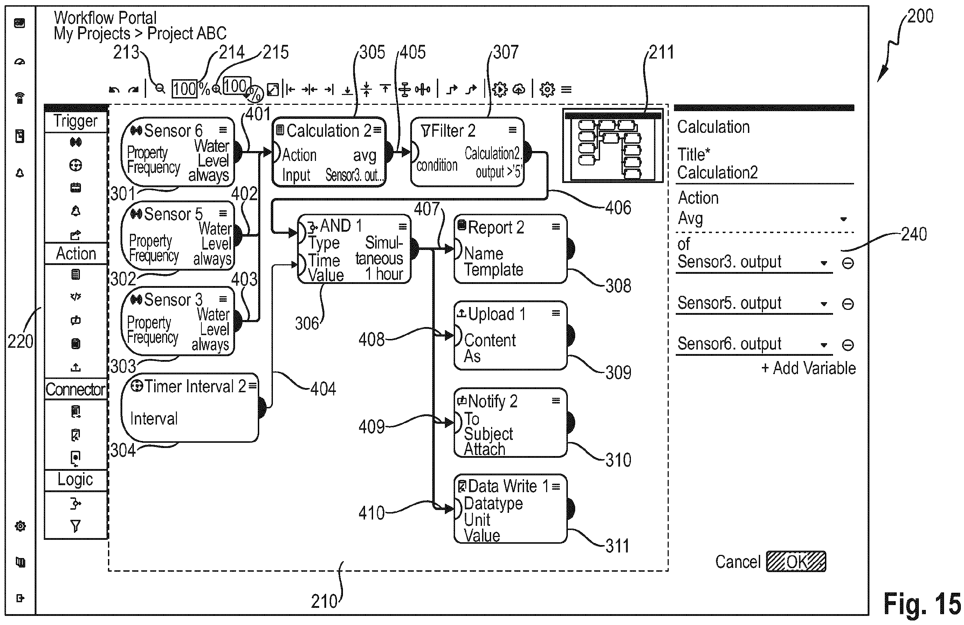

The controller 31 may, for example, display the links connected indirectly to a selected development component with emphasis on the display 35. FIG. 15 is a diagram illustrating a display example of the case of emphasizing links connected indirectly to a selected development component. The development component 305 is selected in FIG. 15. In this case, the links connected directly and indirectly to the development component 305 are emphasized. The links connected directly to the development component 305 are the links connected to the input port or the output port of the selected development component 305. In the example in FIG. 15, the links 401 to 403 and the link 405 are directly connected links. The links connected indirectly to the development component 305 are links, other than the directly connected links, that arrive at the selected development component 305 upon following links on the input side or the output side. In other words, the indirectly connected links are links, other than the directly connected links, that connect to a development component connected in series with the development component 305. In the case of the development component 305, the links 406 to 410 all arrive at the development component 305 upon following links on the input side. Accordingly, these links are links connected indirectly to the development component 305. When the indirectly connected links are thus displayed with emphasis, the user can easily grasp which development components are affected by the input and output of a certain development component. Note that the link 404 is not included among the links connected indirectly to the development component 305. The reason is that the development component 305 is not reached from the link 404 upon following links unidirectionally on either the input side or the output side.

The directly connected links and the indirectly connected links may be displayed with emphasis in different forms. In other words, the controller 31 may display the links connected directly to a selected development component and the links connected indirectly to the selected development component with emphasis in different colors on the display 35. For example, when the links 401 to 403 are displayed with emphasis in blue, and the link 404 is displayed with emphasis in red, the links 406 to 410 may be displayed with emphasis in black. This configuration enables the user to easily grasp the relationship between development components in a form that distinguishes between directly connected links and indirectly connected links.

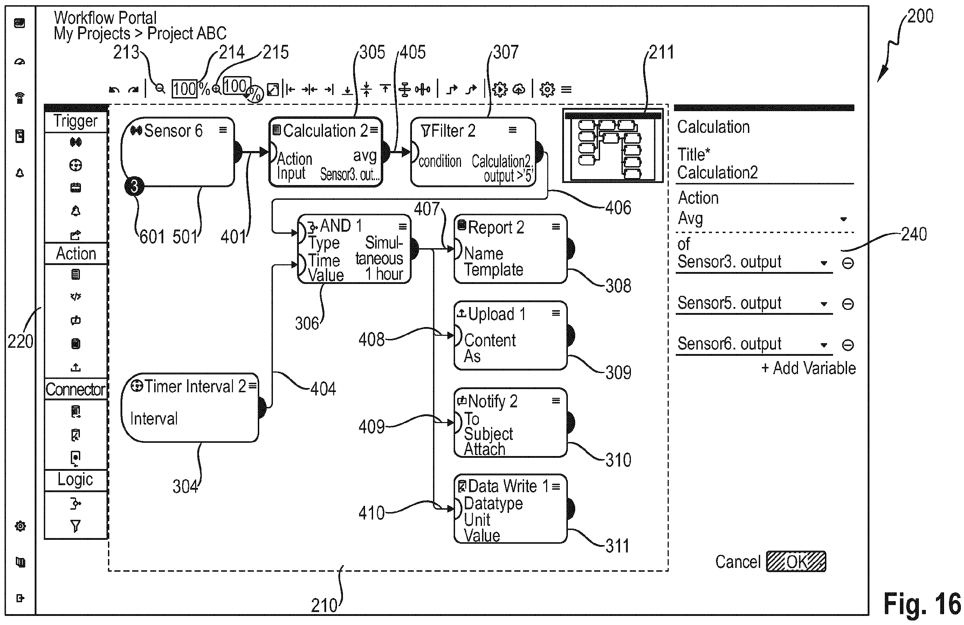

When a plurality of development components placed in the builder area 210 includes a plurality of development components of the same type, the development components of the same type may be displayed by an object that integrates a plurality of development components (integrated object). In other words, a plurality of development components of the same type may be displayed by an integrated object instead of by separate objects. The development components of the same type are development components associated with the same icon and connected to the same destination development component. For example, the icons of the development components 301, 302, 303 placed in the builder area 210 of FIG. 7, described above, are all the same icon (an icon pertaining to a sensor). The development components 301, 302, 303 are all connected to the development component 305. That is, the development components 301, 302, 303 are development components connected to the same destination development component. Accordingly, these development components may be displayed by an integrated object. FIG. 16 illustrates an example of the case of displaying these development components by an integrated object. In FIG. 16, the development components 301, 302, 303 are replaced by an integrated object 501. The integrated object 501 is displayed in a form that includes a corresponding icon (here, an icon illustrating a sensor) to facilitate identification of the type of the integrated development components. The links 401, 402, 403 that connected the respective development components 301, 302, 303 with the destination development component are displayed only by the link 401. When the integrated object 501 is thus displayed, the number of objects and the number of links in the builder area 210 are reduced, enabling the user to easily grasp the relationship between development components.

The integrated object may be displayed in a display form that includes a badge indicating the number of integrated development components. The integrated object 501 in FIG. 16 includes a badge 601. In FIG. 16, three objects are integrated, i.e. the development components 301, 302, 303. The badge therefore indicates "3". The badge enables the user to easily learn the number of integrated development components.

When the plurality of development components placed in the builder area 210 includes a plurality of development components of the same type, the development components of the same type have been described as being indicated by an integrated object, but this example is not limiting. For example, when the plurality of development components placed in the builder area 210 includes a plurality of development components of the same type, the development components of the same type may be indicated by an integrated object if a predetermined condition is satisfied. The predetermined condition may, for example, be the number of development components placed in the builder area 210, the number of links, the display magnification, or a combination thereof.

The information processing apparatus 30 has been described as accessing the server 20 via a web browser in the present embodiment to provide the user with a software development environment, but this example is not limiting. For example, an application according to the system 10 for providing a software development environment may be installed on the information processing apparatus 30, and a software development environment may be provided to the user by communication with the server 20 via the application.

## Claims

1. A system for providing a software development environment to develop software by combining a plurality of development components, the system comprising an information processing apparatus that includes a display and a controller, wherein
the display is configured to display a user interface on which the plurality of development components and a plurality of links connecting the development components to each other are placed; and
when one development component among the plurality of development components is selected, the controller is configured to display a link connected to the selected development component on the display in a display form with emphasis.

2. The system for providing a software development environment of claim 1, wherein the controller is configured to display the selected development component on the display with emphasis.

3. The system for providing a software development environment of claim 1 or 2, wherein the controller is configured to display a link connected to an input port and a link connected to an output port of the selected development component on the display with emphasis in different colors.

4. The system for providing a software development environment of any one of claims 1 to 3, wherein the controller is configured to display a link connected to the selected development component on the display in a higher-level layer than a link not connected to the selected development component.

5. The system for providing a software development environment of any one of claims 1 to 4, wherein the controller is configured to display a link connected indirectly to the selected development component on the display with emphasis.

6. The system for providing a software development environment of claim 5, wherein the controller is configured to display a link connected directly to the selected development component and the link connected indirectly to the selected development component on the display with emphasis in different colors.

7. The system for providing a software development environment of any one of claims 1 to 6, wherein
the plurality of development components includes at least two development components that are of the same type and are connected to the same destination development component, and
the at least two development components are displayed by an integrated object corresponding to the at least two development components.

8. The system for providing a software development environment of claim 7, wherein the integrated object is displayed in a display form that includes a badge indicating the number of integrated development components.

9. A method for providing a software development environment to develop software by combining a plurality of development components, the method comprising:
displaying a user interface on which the plurality of development components and a plurality of links connecting the development components to each other are placed; and
displaying, when one development component among the plurality of development components is selected, a link connected to the selected development component in a display form with emphasis.

10. A non-transitory computer readable medium storing a program, for providing a software development environment, configured to cause a processor to execute operations comprising:
displaying a user interface on which a plurality of development components and a plurality of links connecting the development components to each other are placed; and
displaying, when one development component among the plurality of development components is selected, a link connected to the selected development component in a display form with emphasis.
